# EUROPÄISCHE PATENTSCHRIFT

(11) **EP 0 825 052 B1**
(45) Veröffentlichungstag und Bekanntmachung des Hinweises auf die Patenterteilung: **18.10.2000**
(21) Anmeldenummer: 97111900.3
(22) Anmeldetag: 12.07.1997
(51) Int. Cl.: B60J 10/02

(54) **Befestigung einer Fensterscheibe in einem Kraftfahrzeug**
Fixing arrangement of a window pane in a motor vehicle
Dispositif de fixation d'une vitre dans un véhicule à moteur

(30) Priorität: 22.08.1996 DE 19633842
(43) Veröffentlichungstag der Anmeldung: 25.02.1998
(73) Patentinhaber: Volkswagen Aktiengesellschaft, 38436 Wolfsburg (DE)
(72) Erfinder: Bekaert, Werner, 2320 Hoogstraten (BE)

(56) Entgegenhaltungen:
- EP-A- 0 256 946
- EP-A- 0 351 369
- DE-A- 4 307 634
- US-A- 4 581 276

## Beschreibung

Die Erfindung betrifft eine Fensterscheibe für ein Kraftfahrzeug mit einem angeformten Randteil, umfassend eine Kleberauftragsfläche für den Auftrag eines Klebers zum Verbinden des Randteils mit einem Befestigungsflansch einer Fensteröffnung des Kraftfahrzeugs, wobei die Verbindung zwischen dem Randteil und dem Befestigungsflansch durch Ausüben einer Druck- oder Zugkraft auf die Fensterscheibe lösbar ist. Die Erfindung betrifft weiter ein Kraftfahrzeug mit mindestens einer derartigen Fensterscheibe, ein Kleberauftragsprofil für eine derartige Fensterscheibe, sowie ein Verfahren zur Herstellung einer derartigen Fensterscheibe.

Kraftfahrzeugfensterscheiben der eingangs genannten Art sind aus der gattungsgemäßen DE 43 01 026 A und der EP 0 620 134 A bekannt. Die Kleberauftragsfläche wird dort von der inneren Oberfläche der Schenkel und des Jochs eines im Querschnitt U- oder tannenbaumförmigen Teilbereichs des Randteils in Form eines Polymerprofils gebildet, wobei die Schenkel Hinterschneidungen aufweisen, die als Verankerungsvorsprünge für eine in den Hohlraum zwischen den Schenkeln und dem Joch eingebrachte Kleberraupe dienen. Die Lösbarkeit der Verbindung zwischen dem rahmenartigen Randteil der Fensterscheibe und dem Befestigungsflansch wird dort dadurch erreicht, daß die Kleberraupe und das Polymerprofil aus Stoffen bestehen, die keine adhäsive Bindung eingehen, so daß die Kleberraupe nach dem Aushärten unter Verzahnung mit den Schenkeln formschlüssig mit dem Polymerprofil im Eingriff steht, jedoch nicht mit diesem verklebt ist. Bei einem Druck von innen auf die Fensterscheibe biegen sich die Schenkel des Polymerprofils elastisch nach außen und lösen sich so von der ausgehärteten Kleberraupe, so daß die Fensterscheibe ohne weiteres aus der Fensteröffnung entfernt werden kann.

Diese nach dem sogenannten Pop-out-Prinzip befestigten Fensterscheiben haben den Vorteil, daß sie nicht nur einfach ausgebaut, sondern später auch ohne Nacharbeiten wieder eingesetzt werden können.

Allerdings weisen die bekannten Fensterscheiben einige Nachteile auf. Da der ganze Hohlraum mit Kleber gefüllt werden muß, ist der Kleberverbrauch relativ hoch, was zum einen den Arbeitsablauf verlangsamt und zum anderen die Verfügbarkeit der Kleberauftragsvorrichtung verringert, weil der Nachschub des in Fässern angelieferten Klebers häufig unterbrochen wird. Außerdem muß die Düse der Kleberauftragsanlage in den Hohlraum des U-Profils eintauchen, was ebenfalls den Arbeitsablauf etwas verlangsamt und einen verkleinerten Düsendurchmesser notwendig macht. Mischverbau von Scheiben mit dem genannten U-Profil und konventionellen Scheiben (bei denen eine keilförmige Kleberrampe direkt aufs Glas oder auf einem Spacer aufgetragen werden muß) wird dadurch erschwert oder unmöglich. Darüber hinaus ist bei kleinerem Düsendurchmesser der Druck in der Kleberauftragsanlage höher, was einen größeren Verschleiß zur Folge hat.

Weil der Kleber vom U-Profil umfaßt wird, kommt keine - für die Aushärtung des Klebers erforderliche - Luftfeuchtigkeit bis an den Kleber. Darum müssen bei den bekannten Fensterscheiben an der Innenseite des U-Profils Hydroxylionen oder eine feucht haltende Lösung angebracht werden (vgl. EP 0 620 134 A), um zu vermeiden, daß bei den Kraftfahrzeug herstellern erhebliche Parkflächen erforderlich sind, auf denen die ansonsten fertigen Kraftfahrzeuge bis zur Aushärtung des Klebers abgestellt werden müßten. Daneben werden bei großer Nachfrage durch die verzögerte Auslieferung zudem nicht unbeträchtliche Einnahmeverluste verursacht. Da der Kleber und der Randteil der Fensterscheibe keine adhäsive Bindung eingehen dürfen, können weiter nur ganz bestimmte Materialpaarungen eingesetzt werden, die hinsichtlich anderer Eigenschaften, wie Extrudierbarkeit, Materialkosten usw. nicht immer optimal geeignet sind.

Ausgehend hiervon liegt der Erfindung die Aufgabe zugrunde, eine Fensterscheibe der eingangs genannten Art dahingehend zu verbessern, daß die vorgenannten Nachteile der bekannten Fensterscheiben vermieden werden.

Diese Aufgabe wird erfindungsgemäß dadurch gelöst, daß die Kleberauftragsfläche auf einem lösbar mit dem Randteil verbundenen Kleberauftragsprofil ausgebildet ist, welches sich durch Ausüben der Druck- oder Zugkraft auf die Fensterscheibe vom Randteil lösen läßt. Der Erfindung liegt der Gedanke zugrunde, ähnlich wie bei der bekannten Fensterscheibe zwischen dem Randteil und dem Befestigungsflansch erstens eine zum schnellen und einfachen Befestigen der Fensterscheibe erforderliche Klebeverbindung und zweitens eine zum Lösen der Fensterscheibe erforderliche lösbare Verbindung vorzusehen, jedoch im Unterschied zu dieser die lösbare Verbindung an die Grenzfläche zwischen dem zusätzlichen Kleberauftragsprofil und dem Randteil zu verlagern, während an den Grenzflächen des Klebers nur klebertypische Klebeverbindungen vorgesehen sind. Das heißt, der lösbar mit dem Randteil im Eingriff stehende Teil des Klebers wird durch das Kleberauftragsprofil ersetzt, wodurch es möglich ist, die benötigte Klebermenge zu verringern, die Aushärtungszeit zu verkürzen, die Anzahl der verwendbaren Materialpaarungen Kleber/Randteil zu vergrößern und damit auch das Kostenreduzierungspotential zu erhöhen, die Gefahr einer Beeinträchtigung der formschlüssigen Verbindung durch eine Verformung des Klebers vor dessen Aushärten zu beseitigen und nicht zuletzt auch das Potential einer Gewichtsminderung der Fensterscheibe zu vergrößern, indem die Herstellung des Kleberauftragsprofils aus einem spezifisch leichteren Material als demjenigen des Klebers ermöglicht wird.

Eine bevorzugte Ausgestaltung der Erfindung sieht vor, daß das Kleberauftragsprofil formschlüssig mit dem Randteil im Eingriff steht und durch den Formschluß in oder auf diesem verankert ist. Die Verankerung wird vorzugsweise dadurch bewirkt, daß sich Vorsprünge des Randteils und Vertiefungen des Kleberauftragsprofils und/oder Vorsprünge des Kleberauftragsprofils und Vertiefungen des Randteils in einer Bewegungsrichtung der Fensterscheibe beim Lösen hintergreifen und den Randteil und das Kleberauftragsprofil zusammenhalten, wobei sie vorzugsweise miteinander verzahnt sind.

Um das Lösen der Fensterscheibe beim Ausbau derselben zu erleichtern, kann wie bei der bekannten Fensterscheibe nur der Randteil elastisch verformbar sein und mit einem starren Kleberauftragsprofil im Eingriff stehen. Alternativ kann jedoch auch in Verbindung mit einem teilelastischen oder starren Randteil ein biegsames und/oder elastisches Kleberauftragsprofil verwendet werden, das eine Zulieferung an den Hersteller oder an die Werkstätten als Endlosprofil in Rollenform gestattet, welches nach einem vorherigen Abschneiden in passende Länge mit dem um die Fensterscheibe umlaufenden Randteil in Eingriff gebracht werden kann. Im Unterschied zu der bekannten Fensterscheibe erfolgt die Verformung bei der Trennung der formschlüssigen Verbindung, d.h. beim Ausbau der Fensterscheibe in diesem Fall zumindest teilweise auf der Seite des Kleberauftragsprofils, welches nicht wiederverwendet wird, während der Randteil der wiederverwendbaren Fensterscheibe nicht oder weniger stark verformt wird und somit weniger anfällig für eine Beschädigung ist.

Durch die Bereitstellung des Kleberauftragsprofils braucht im Vergleich zu der bekannten Fensterscheibe nur eine verhältnismäßig dünne Kleberraupe aufgetragen werden, deren Lage sich somit beim Auftragen besser steuern läßt, so daß die Gefahr einer Verschmutzung benachbarter Bauteile verringert wird. Weitere vorteilhafte Ausgestaltungen der Erfindung sehen jeweils zusätzlich vor, daß das Kleberauftragsprofil auf der dem Befestigungsflansch zugewandten Seite des Randteils über diesen übersteht, damit die Kleberauftragsfläche einen Abstand vom Randteil aufweist, daß die Kleberauftragsfläche eine größere Breite als eine zum Verkleben mit dem Befestigungsflansch dienende Kleberraupe aufweist und daß die Kleberauftragsfläche zum Befestigungsflansch hin konkav gewölbt ist und/oder erhöhte Seitenränder aufweist. Insbesondere bei einem Wiedereinbau der Fensterscheibe in einer Werkstatt, wo der Auftrag des Klebers von Hand erfolgt, wird durch diese Vorkehrungen eine bessere Steuerung des Kleberauftrags ermöglicht und eine ggf. zum Anhaften führende Berührung zwischen dem Kleber und dem Randteil sicher verhindert.

Um die Haftung zwischen Kleber und Kleberauftragsfläche zu verbessern, weist die letztere zweckmäßig im Querschnitt eine unebene und damit größere Oberfläche auf und ist zweckmäßig mit Längsrillen versehen, die eine Herstellung des Kleberauftragsprofils durch Extrudieren ermöglichen.

Gemäß einer weiteren bevorzugten Ausgestaltung der Erfindung greift das Kleberauftragsprofil in eine umlaufende Aufnahmenut des Randteils ein, deren Querschnitt zweckmäßig komplementär zu demjenigen des in die Aufnahmenut eingreifenden Teils des Kleberauftragsprofils ist, wobei sich nebeneinander auf den beiden Teilen angeordnete, in Längsrichtung der Aufnahmenut und des Kleberauftragsprofils verlaufende Vorsprünge gegenseitig hintergreifen. Vorzugsweise weist die Aufnahmenut im Querschnitt zickzackförmige seitliche Begrenzungen auf, die in Richtung des Befestigungsflanschs konvergieren können.

Im Gegensatz zu der bekannten Fensterscheibe ist es alternativ jedoch auch möglich, den Randteil mit einem dem Befestigungsflansch gegenüberliegenden umlaufenden Steg zu versehen, der formschlüssig in eine zum Randteil hin offene Längsnut des Kleberauftragsprofils eingreift. Auch in diesem Fall weisen die Längsnut und ein in die Längsnut eingreifender Teil des Stegs zweckmäßig einen komplementären Querschnitt mit einem oder mehreren in Längsrichtung verlaufenden überstehenden Vorsprüngen bzw. Vertiefungen auf.

Im folgenden wird die Erfindung anhand zweier in der Zeichnung dargestellter Ausführungsbeispiele näher erläutert. Es zeigen
Fig. 1: eine Schnittansicht durch den Randbereich eines Kraftfahrzeugfensters mit einer erfindungsgemäßen Fensterscheibe;
Fig. 2: eine Schnittansicht entsprechend Fig. 1, jedoch bei Verwendung einer anderen erfindungsgemäßen Fensterscheibe.

Das in der Zeichnung im Querschnitt teilweise dargestellte Kraftfahrzeugfenster 1 besteht im wesentlichen aus einem um eine Fensteröffnung 2 umlaufenden Befestigungsflansch 3 und einer in die Fensteröffnung 2 eingesetzten Fensterscheibe 4, die aus einer Glasscheibe 5, einem auf dem Rand der Glasscheibe 5 angeformten Kunststoffrandteil 6 und einem lösbar mit dem Randteil 6 verbundenen Kleberauftragsprofil 7 besteht, welches beim Einsetzen der Fensterscheibe 4 in die Fensteröffnung 2 mittels eines Klebers 8 mit einer nach außen weisenden Befestigungsoberfläche 9 des Befestigungsflanschs 3 verklebt wird.

Der aus Blech bestehende Befestigungsflansch 3 weist einen im wesentlichen Z-förmigen Querschnitt mit einem in der Ebene der Fensterscheibe mit der Karosserie verschweißten Halteschenkel 10 auf.

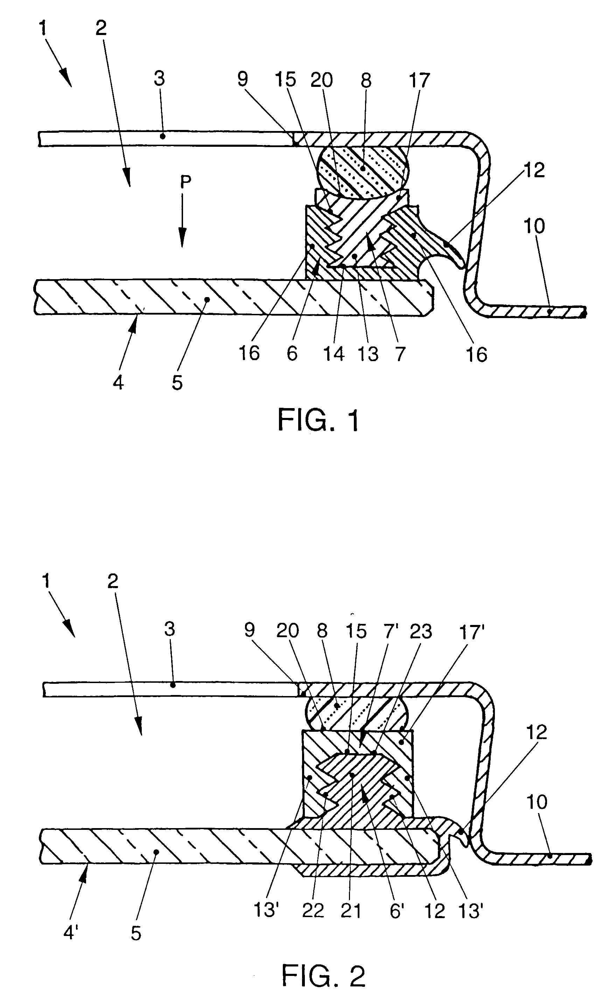

Bei dem in Fig. 1 dargestellten Ausführungsbeispiel besteht der Randteil 6 aus einem extrudierbaren thermoplastischen Elastomer, beispielsweise einem Polyolefin-Elastomer aus isotaktischem Polypropylen und Ethylen-Propylen-Dien-Kautschuk, der unter dem Produktnamen SANTOPRENE bei der Fa. Advanced Elastomer Systems erhältlich ist. Der Randteil 6 ist auf seiner von der Fensteröffnung 2 abgewandten Seite mit einer Dichtlippe 12 versehen, welche nach dem Einbau gegen den Befestigungsflansch 3 anliegt. Weiter weist der Randteil 6 eine zum Befestigungsflansch 3 hin offene umlaufende Aufnahmenut 14 auf, in welche das Kleberauftragsprofil 7 mit einem der Fensterscheibe 4 zugewandten Fußteil 13 eingreift.

Die Aufnahmenut 14 des Randteils 6 und der Fußteil 13 des Kleberauftragsprofils 7 weisen einen komplementären Querschnitt auf, wobei sowohl die beiden gegenüberliegenden Innenflächen der Seitenwände 16 der Aufnahmenut 14 als auch die entgegengesetzten Längsseitenflächen des Fußteils 13 einen zickzackförmigen Querschnitt mit einander entsprechenden dreieckigen Vorsprüngen bzw. Vertiefungen aufweisen, so daß der Fußteil 13 und der Randteil 6 unter gegenseitiger Verzahnung formschlüssig ineinandergreifen, um das Kleberauftragsprofil 7 lösbar in der Aufnahmenut 14 zu verankern. Die Anzahl der Vorsprünge bzw. Vertiefungen auf bzw. in den Seitenwänden 16 der Aufnahmenut und den Längsseiten des Fußteils 13 kann drei betragen, wie dargestellt, jedoch in Abhängigkeit von ihrer Form, ihrer Eingriffstiefe und der Materialpaarung auch größere oder kleinere Werte annehmen.

Je nachdem, ob das Kleberauftragsprofil 7 zum Beispiel durch Koextrusion zusammen mit dem Randteil 6 in einem Arbeitsgang auf der Glasscheibe 5 angebracht oder als Meterware nach vorherigem Längenzuschnitt bzw. als starres Formteil nachträglich in die Aufnahmenut 14 eingesetzt wird, kann es aus einem extrudierbaren oder durch Spritzgießen herstellbaren elastischen, halbelastischen oder starren, thermoplastischen oder vernetzbaren Kunststoffmaterial bestehen, vorausgesetzt es weist gute Haftungseigenschaften mit dem verwendeten Kleber 8 auf, der im allgemeinen ein PUR-Kleber ist.

Der Randteil 6 und das Kleberauftragsprofil 7 sind durch eine dazwischen angeordnete Trennfuge 15 getrennt, so daß sie durch eine von innen in Richtung des Pfeils P in Fig. 1 auf die Fensterscheibe 4 ausgeübte Druckkraft voneinander gelöst werden können. Dabei biegen sich die beiden Seitenwände 16 der Aufnahmenut 14 infolge ihrer Elastizität nach außen, ggf. unter gleichzeitiger Verformung des Kleberauftragsprofils 7, falls dieses aus einem elastischen oder halbelastischen Material besteht.

Ein von der Fensterscheibe 4 abgewandter, dem Befestigungsflansch 3 benachbarter Kopfteil 17 des Kleberauftragsprofils 7 weist eine etwas größere Breite als der Fußteil 13 auf. Dadurch wird verhindert, daß der als Kleberraupe auf eine dem Befestigungsflansch 3 gegenüberliegende Kleberauftragsfläche 20 aufgebrachte Kleber 8 mit dem Randteil 6 in Berührung kommt. Zur Vergrößerung der Grenzfläche Kleber/Kleberauftragsprofil bei gleicher Breite der Kleberraupe sowie zur Führung einer Austrittsdüse einer Kleberpistole (nicht dargestellt) bei einem manuellen Kleberauftrag ist die Kleberauftragsfläche 20 in Richtung des Befestigungsflanschs 3 leicht konkav gewölbt und weist erhöhte Seitenränder auf. Zusätzlich kann die Kleberauftragsfläche 20 mit kleinen, in Längsrichtung des Profils 7 verlaufenden Rillen versehen sein (nicht dargestellt).

Im Unterschied dazu umgreift der Randteil 6' bei dem in Fig. 2 dargestellten Ausführungsbeispiel den Rand der Glasscheibe 5 und weist auf seiner nach innen weisenden Seite an Stelle der Aufnahmenut 14 einen um die innere Breitseitenfläche der Fensterscheibe 4' umlaufenden Steg 21 auf, dessen entgegengesetzte Längsseitenflächen 22 im Querschnitt zickzackförmig sind. Der Steg 21 steht formschlüssig mit einer in Richtung der Fensterscheibe 4' offenen, zum Steg 21 komplementären Längsnut 23 des Kleberauftragsprofils 7' im Eingriff, welches einen im wesentlichen U-förmigen Querschnitt aufweist, wobei das den Kopfteil 17' bildende Joch auf seiner dem Befestigungsflansch 3 zugewandten Seite mit der Kleberauftragsfläche 20 versehen ist, während seine beiden, den Fußteil 13' bildenden Schenkel mit den Längsseitenflächen 22 des Stegs 21 verzahnt sind.

Bei dieser Ausführungsform kann der Randteil 6' aus einem verhältnismäßig unelastischen thermoplastischen Kunststoff bestehen, während das Kleberauftragsprofil 7' aus einem vorzugsweise extrudierbaren Elastomer besteht, so daß sich die beiden die Längsnut 23 begrenzenden Schenkel 13' beim Lösen der Fensterscheibe 4' durch eine Kraft in Richtung des Pfeils P auseinanderspreizen, wodurch sich der Steg 21 aus der Längsnut 23 herausbewegt.

In beiden Fällen ist die Fensterscheibe 4, 4' ohne Nacharbeiten wiederverwendbar, während der Kleber 8 und das Kleberauftragsprofil 7, 7' an der Befestigungsoberfläche 9 des Befestigungsflanschs 3 abgetrennt werden, wobei sich ggf. zurückbleibende Kleberreste genausogut wie die Befestigungsoberfläche 9 selbst als Grundlage für einen erneuten Kleberauftrag eignen.

Zur Herstellung der mit dem Randteil 6, 6' und dem Kleberauftragsprofil 7, 7' versehenen Fensterscheiben 4, 4' wird der Randteil 6, 6' durch Extrusion oder in einer Spritzform auf dem umlaufenden Rand der vorbereiteten und gereinigten Glasscheibe 5 angeformt und dabei fest mit diesem verbunden. Das verwendete Auftragsverfahren, d.h. Extrusion oder Spritzguß, wird u.a. durch die für den Randteil 6, 6' und das Kleberauftragsprofil 7, 7' verwendeten Materialien sowie durch eine vorhandene maschinelle Ausrüstung bestimmt.

Im Falle einer Extrusion des Randteils 6, 6' kann das Kleberauftragsprofil 7, 7' gleichzeitig mit dem Randteil 6, 6' durch Koextrusion gefertigt werden, wobei Kunststoffmaterialien verwendet werden, die nach dem Austritt aus einer Extrusionsdüse auch in fließfähigem Zustand nicht aneinander haften. Alternativ dazu kann zuerst der Randteil 6, 6' auf den Rand der Glasscheibe 5 aufextrudiert und anschließend das Kleberauftragsprofil 7, 7' in Form eines getrennt gefertigten Bauteils in die Aufnahmenut 14 (Fig. 1) oder auf den umlaufenden Steg 21 gedrückt (Fig. 2) werden.

Im Falle einer Herstellung durch Spritzgießen kann das Kleberauftragsprofil 7, 7' in die Spritzform eingelegt und anschließend der Randteil 6, 6' in Abhängigkeit von den gewünschten Elastizitätseigenschaften aus einem Elastomer, einem thermoplastischen Kunststoff oder aus einem sich vernetzenden Zweikomponentengemisch, wie beispielsweise Polyurethan, gespritzt werden, wobei ggf. zuvor ein Trennmittel (nicht dargestellt) auf die mit dem Randteil 6, 6' in Berührung stehenden Flächen des Kleberauftragsprofils 7, 7' aufgetragen wird, um beim Spritzen ein Anhaften am Randteil 6, 6' zu verhindern. Alternativ können der Randteil 6, 6' und das Kleberauftragsprofil 7, 7' auch hier wie beim Extrudieren als zwei getrennte Bauteile hergestellt und nachträglich miteinander in formschlüssigen Eingriff gebracht werden.

Vor dem Einbau der vorbereiteten Fensterscheibe 4, 4' wird der Kleber 8 als keilförmige Kleberraupe auf die der Befestigungsoberfläche 9 gegenüberliegende Kleberauftragsfläche 20 des Kleberauftragsprofils 7, 7' aufgetragen, wobei der keilförmige Auftrag im Gegensatz zu einem Kleberauftrag in eine Aufnahmenut des Randteils, wie aus der DE 43 01 026 A bekannt, einen gleichbleibenden Kleberraupenquerschnitt gewährleistet, da die Austrittsdüse der Kleberpistole nicht mit dem Randteil 6, 6' oder dem Kleberauftragsprofil 7, 7' in Berührung kommt. Aufgrund des dadurch erreichten Fehlens von Einfallstellen in der Kleberraupe wird außerdem die Wasserdichtigkeit der Fensterscheibe 4, 4' verbessert und die Verschmutzung benachbarter Bauelemente mit Kleber 8 verhindert.

Nach einem später erfolgten Ausbau der Fensterscheibe 4, 4' kann der Wiedereinbau in einer Werkstatt, z.B. nach einem Nachlackieren der Karosserie im Bereich der Fensteröffnung 2 dadurch erfolgen, daß ein neues Kleberauftragsprofil 7, 7' mit einem entsprechenden Querschnitt, jedoch ggf. aus einem anderen Material als das ursprüngliche Profil 7, 7', auf dem Randteil 6, 6' angebracht, und die Fensterscheibe 4, 4' nach einem Auftrag einer Kleberraupe auf dessen Kleberauftragsfläche 20 in die Fensteröffnung 2 eingesetzt wird.

Wenn der Randteil 6 aus einem geeigneten Material besteht und eine Aufnahmenut 14 aufweist, wie beispielsweise in Fig. 1 dargestellt, kann beim Wiedereinbau alternativ auch auf das Kleberauftragsprofil 7 verzichtet werden und der Kleber 8 unmittelbar in die Aufnahmenut 14 eingebracht werden, wobei allerdings in diesem Fall ein Kleber verwendet werden muß, welcher mit dem Material des Randteils 6 keine adhäsive Bindung eingeht (vgl. DE 43 01 026 A).

## Patentansprüche

1. Fensterscheibe (4,4') für ein Kraftfahrzeug mit einem angeformten Randteil (6,6'), umfassend eine Kleberauftragsfläche (20) für den Auftrag eines Klebers (8) zum Verbinden des Randteils (6,6') mit einem Befestigungsflansch (3) einer Fensteröffnung (2) des Kraftfahrzeugs, wobei die Verbindung zwischen dem Randteil (6,6') und dem Befestigungsflansch (3) durch Ausüben einer Druck- oder Zugkraft auf die Fensterscheibe (4,4') lösbar ist, dadurch gekennzeichnet, daß die Kleberauftragsfläche (20) auf einem lösbar mit dem Randteil (6, 6') verbundenen Kleberauftragsprofil (7, 7') ausgebildet ist, welches sich durch Ausüben der Druck- oder Zugkraft auf die Fensterscheibe (4) vom Randteil (6, 6') lösen läßt.

2. Fensterscheibe nach Anspruch 1, dadurch gekennzeichnet, daß das Kleberauftragsprofil (7, 7') formschlüssig mit dem Randteil (6, 6') im Eingriff steht und durch den Formschluß in oder auf diesem verankert ist.

3. Fensterscheibe nach Anspruch 1 oder 2, dadurch gekennzeichnet, daß der Randteil (6, 6') und das Kleberauftragsprofil (7, 7') miteinander verzahnt sind.

4. Fensterscheibe nach einem der Ansprüche 1 bis 3, dadurch gekennzeichnet, daß das Kleberauftragsprofil (7, 7') aus einem Material besteht, mit dem sich der Kleber (8) adhäsiv verbindet.

5. Fensterscheibe nach einem der Ansprüche 1 bis 4, dadurch gekennzeichnet, daß der Kleber (8) ein PUR-Kleber ist.

6. Fensterscheibe nach einem der Ansprüche 1 bis 5, dadurch gekennzeichnet, der Randteil (6, 6') und/oder das Kleberauftragsprofil (7, 7') zum Lösen der Fensterscheibe (4, 4') vom Befestigungsflansch (3) elastisch verformbar ist.

7. Fensterscheibe nach einem der Ansprüche 1 bis 6, dadurch gekennzeichnet, daß die Kleberauftragsfläche (20) des Kleberauftragsprofils (7, 7') eine größere Breite als eine zum Verkleben mit dem Befestigungsflansch (3) dienende Raupe des Klebers (8) aufweist.

8. Fensterscheibe nach einem der Ansprüche 1 bis 7, dadurch gekennzeichnet, daß das Kleberauftragsprofil (7, 7') auf der dem Befestigungsflansch (3) zugewandten Seite des Randteils (6, 6') über den Randteil (6, 6') übersteht.

9. Fensterscheibe nach einem der Ansprüche 1 bis 8, dadurch gekennzeichnet, daß die Kleberauftragsfläche (20) einen unebenen Querschnitt aufweist.

10. Fensterscheibe nach Anspruch 9, dadurch gekennzeichnet, daß die Kleberauftragsfläche (20) zum Befestigungsflansch (3) hin konkav gewölbt ist.

11. Fensterscheibe nach Anspruch 9 oder 10, dadurch gekennzeichnet, daß die Kleberauftragsfläche (20) Längsrillen aufweist.

12. Fensterscheibe nach einem der Ansprüche 1 bis 11, dadurch gekennzeichnet, daß die Kleberauftragsfläche (20) erhöhte Seitenränder aufweist.

13. Fensterscheibe nach einem der Ansprüche 1 bis 12, dadurch gekennzeichnet, daß das Kleberauftragsprofil (7) in eine um die Fensteröffnung (2) umlaufende Aufnahmenut (14) des Randteils (6) eingreift.

14. Fensterscheibe nach Anspruch 13, dadurch gekennzeichnet, daß die Aufnahmenut (14) und ein in die Aufnahmenut (14) eingreifender Teil (13) des Kleberauftragsprofils (7) einen komplementären Querschnitt aufweisen.

15. Fensterscheibe nach Anspruch 13 oder 14, dadurch gekennzeichnet, daß gegenüberliegende Seitenwände (16) der Aufnahmenut (14) jeweils mindestens einen in Längsrichtung der Aufnahmenut (14) verlaufenden Vorsprung aufweisen, der in einer Bewegungsrichtung der Fensterscheibe (4) beim Lösen einen parallelen Vorsprung des Kleberauftragsprofils (7) hintergreift.

16. Fensterscheibe nach einem der Ansprüche 1 bis 12, dadurch gekennzeichnet, daß ein dem Befestigungsflansch (3) zugewandter umlaufender Steg (21) des Randteils (6') in eine Längsnut (23) des Kleberauftragsprofils (7') eingreift.

17. Fensterscheibe nach Anspruch 16, dadurch gekennzeichnet, daß die Längsnut (23) und ein in die Längsnut (23) eingreifender Teil des Stegs (21) einen komplementären Querschnitt aufweisen.

18. Fensterscheibe nach Anspruch 16 oder 17, dadurch gekennzeichnet, daß gegenüberliegende Seitenwände (22) der Längsnut (23) jeweils mindestens einen in Längsrichtung der Längsnut (23) verlaufenden Vorsprung aufweisen, der in einer Bewegungsrichtung der Fensterscheibe (4') beim Lösen einen parallelen Vorsprung des Randteils (6') hintergreift.

19. Kraftfahrzeug, gekennzeichnet durch mindestens eine Fensterscheibe nach einem der Ansprüche 1 bis 18.

20. Kleberauftragsprofil zur Anbringung zwischen einem Befestigungsflansch (3) einer Fensteröffnung (2) eines Kraftfahrzeugs und einem Randteil (6, 6') einer zum Einbau in die Fensteröffnung (2) vorgesehenen Fensterscheibe (4, 4'), mit einem Kopfteil (17, 17'), der auf seiner dem Befestigungsflansch (3) zugewandten Seite eine Kleberauftragsfläche (20) aufweist, und mindestens einem Fußteil (13, 13'), der durch eine formschlüssige Verankerung lösbar mit dem Randteil verbindbar ist.

21. Verfahren zur Herstellung einer Fensterscheibe nach einem der Ansprüche 1 bis 18, dadurch gekennzeichnet, daß der Randteil (6, 6') unter Koextrusion mit dem Kleberauftragsprofil (7, 7') auf dem Rand einer Glasscheibe (5) angeformt wird.

22. Verfahren zur Herstellung einer Fensterscheibe nach einem der Ansprüche 1 bis 18, dadurch gekennzeichnet, daß der Randteil (6, 6') zuerst auf dem Rand einer Glasscheibe (5) angeformt und anschließend das Kleberauftragsprofil (7, 7') angebracht wird.

## Claims

1. Window pane (4, 4') for a motor vehicle having an integrally formed edge part (6, 6'), comprising an adhesive-layer surface (20) for the application of an adhesive (8) for the purpose of connecting the edge part (6, 6') to an attachment flange (3) of a window cut-out (2) of the motor vehicle, wherein the connection between the edge part (6, 6') and the attachment flange (3) can be released by exerting a pushing or pulling force upon the window pane (4, 4'), characterised in that the adhesive-layer surface (20) is formed on an adhesive-layer profile (7, 7') which is releasibly connected to the edge part (6, 6') and which can be released from the edge part (6, 6') by exerting the pushing or pulling force upon the window pane (4).

2. Window pane according to claim 1, characterised in that the adhesive-layer profile (7, 7') is in positive-locking engagement with the edge part (6, 6') and is anchored therein or thereon by virtue of the positive-locking arrangement.

3. Window pane according to claim 1 or 2, characterised in that the edge part (6, 6') and the adhesive-layer profile (7, 7') are mutually connected by a toothing arrangement.

4. Window pane according to any one of the claims 1 to 3, characterised in that the adhesive-layer profile (7, 7') consists of a material with which the adhesive (8) is connected in an adhesive manner.

5. Window pane according to any one of the claims 1 to 4, characterised in that the adhesive (8) is a PUR-adhesive.

6. Window pane according to any one of the claims 1 to 5, characterised in that the edge part (6, 6') and/or the adhesive-layer profile (7, 7') can be deformed in an elastic manner for the purpose of releasing the window pane (4, 4') from the attachment flange (3).

7. Window pane according to any one of the claims 1 to 6, characterised in that the adhesive-layer surface (20) of the adhesive-layer profile (7, 7') is wider than a bead of the adhesive (8) which serves the adhesion to the attachment flange (3).

8. Window pane according to any one of the claims 1 to 7, characterised in that the adhesive-layer profile (7, 7') protrudes beyond the edge part (6, 6') on the side of the edge part (6, 6') facing the attachment flange (3).

9. Window pane according to any one of the claims 1 to 8, characterised in that the adhesive-layer surface (20) comprises an uneven cross-section.

10. Window pane according to claim 9, characterised in that the adhesive-layer surface (20) is curved in a concave manner towards the attachment flange (3).

11. Window pane according to claim 9 or 10, characterised in that the adhesive-layer surface (20) comprises longitudinal grooves.

12. Window pane according to any one of the claims 1 to 11, characterised in that the adhesive-layer surface (20) comprises elevated side edges.

13. Window pane according to any one of the claims 1 to 12, characterised in that the adhesive-layer profile (7) engages into a receiving groove (14) of the edge part (6) located on the circumference of the window cut-out (2).

14. Window pane according to claim 13, characterised in that the receiving groove (14) and a part (13) of the adhesive-layer profile (7) engaging into the receiving groove (14) comprise a complementary cross-section.

15. Window pane according to claim 13 or 14, characterised in that opposite-lying side walls (16) of the receiving groove (14) each comprise at least one projection which extends in the longitudinal direction of the receiving groove (14) and which engages behind a parallel projection of the adhesive-layer profile (7) in one movement direction of the window pane (4) during the release procedure.

16. Window pane according to any one of the claims 1 to 12, characterised in that a circumferential cross-piece (21), facing the attachment flange (3), of the edge part (6') engages into a longitudinal groove (23) of the adhesive-layer profile (7').

17. Window pane according to claim 16, characterised in that the longitudinal groove (23) and a part of the cross-piece (21) engaging into the longitudinal groove (23) comprise a complementary cross-section.

18. Window pane according to claim 16 or 17, characterised in that opposite-lying side walls (22) of the longitudinal groove (23) each comprise at least one projection which extends in the longitudinal direction of the longitudinal groove (23) and which engages behind a parallel projection of the edge part (6') in one movement direction of the window pane (4') during the release procedure.

19. Motor vehicle, characterised by at least one window pane according to any one of the claims 1 to 18.

20. Adhesive-layer profile for attachment between an attachment flange (3) of a window cut-out (2) of a motor vehicle and an edge part (6, 6') of a window pane (4, 4') which is provided for installation into the window cut-out (2), having a head part (17, 17') which on its side facing the attachment flange (3) comprises an adhesive-layer surface (20), and having at least one base part (13, 13') which can be connected in a releasible manner to the edge part by virtue of a positive-locking anchoring arrangement.

21. Method of producing a window pane according to any one of the claims 1 to 18, characterised in that the edge part (6, 6') is integrally formed on the edge of a glass pane (5) by co-extrusion with the adhesive-layer profile (7, 7').

22. Method of producing a window pane according to any one of the claims 1 to 18, characterised in that the edge part (6, 6') is firstly integrally formed on the edge of a glass pane (5) and then the adhesive-layer profile (7, 7') is attached.

## Revendications

1. Vitre de fenêtre (4, 4') pour un véhicule automobile, avec une partie de bord moulée (6, 6'), comprenant une surface d'application d'adhésif (20) pour l'application d'un adhésif (8) servant à relier la partie de bord (6, 6') à un collet de fixation (3) d'une ouverture de fenêtre (2) du véhicule automobile, la liaison entre la partie de bord (6, 6') et le collet de fixation (3) pouvant être supprimée en exerçant une force de pression ou de traction sur la vitre de fenêtre (4, 4'), caractérisée en ce que la surface d'application d'adhésif (20) est ménagée sur un profilé d'application d'adhésif (7, 7') qui est relié de manière détachable à la partie de bord (6, 6') et qui peut être détaché de la partie de bord (6, 6') en exerçant la force de pression ou de traction sur la vitre de fenêtre (4).

2. Vitre de fenêtre selon la revendication 1, caractérisée en ce que le profilé d'application d'adhésif (7, 7') est en prise par complémentarité de formes avec la partie de bord (6, 6') et est ancré dans ou sur celle-ci par la liaison par complémentarité de formes.

3. Vitre de fenêtre selon la revendication 1 ou 2, caractérisée en ce que la partie de bord (6, 6') et le profilé d'application d'adhésif (7, 7') sont assemblés entre eux par crantage.

4. Vitre de fenêtre selon l'une des revendications 1 à 3, caractérisée en ce que le profilé d'application d'adhésif (7, 7') est réalisé dans une matière à laquelle l'adhésif (8) est relié de manière adhésive.

5. Vitre de fenêtre selon l'une des revendications 1 à 4, caractérisée en ce que l'adhésif (8) est un adhésif PUR.

6. Vitre de fenêtre selon l'une des revendications 1 à 5, caractérisée en ce que la partie de bord (6, 6') et/ou le profilé d'application d'adhésif (7, 7') sont déformables élastiquement pour détacher la vitre de fenêtre (4, 4') du collet de fixation (3).

7. Vitre de fenêtre selon l'une des revendications 1 à 6, caractérisée en ce que la surface d'application d'adhésif (20) du profilé d'application d'adhésif (7, 7') présente une largeur supérieure à un cordon d'adhésif (8) servant au collage avec le collet de fixation (3).

8. Vitre de fenêtre selon l'une des revendications 1 à 7, caractérisée en ce que le profilé d'application d'adhésif (7, 7') dépasse de la partie de bord (6, 6') sur le côté de celle-ci tourné vers le collet de fixation (3).

9. Vitre de fenêtre selon l'une des revendications 1 à 8, caractérisée en ce que la surface d'application d'adhésif (20) présente une section non plane.

10. Vitre de fenêtre selon la revendication 9, caractérisée en ce que, en direction du collet de fixation (3), la surface d'application d'adhésif (20) présente une forme concave.

11. Vitre de fenêtre selon la revendication 9 ou 10, caractérisée en ce que la surface d'application d'adhésif (20) comporte des stries longitudinales.

12. Vitre de fenêtre selon l'une des revendications 1 à 11, caractérisée en ce que la surface d'application d'adhésif (20) comporte des bords latéraux surélevés.

13. Vitre de fenêtre selon l'une des revendications 1 à 12, caractérisée en ce que le profilé d'application d'adhésif (7) pénètre dans une gorge réceptrice (14) de la partie de bord (6), ladite gorge réceptrice entourant l'ouverture de fenêtre (2).

14. Vitre de fenêtre selon la revendication 13, caractérisée en ce que la gorge réceptrice (14) et une partie (13) du profilé d'application d'adhésif (7) engagée dans la gorge réceptrice (14) présentent des sections complémentaires.

15. Vitre de fenêtre selon la revendication 13 ou 14, caractérisée en ce que des parois latérales en vis-à-vis (16) de la gorge réceptrice (14) comportent chacune au moins une saillie qui est orientée dans la direction longitudinale de la gorge réceptrice (14) et qui s'engage derrière une saillie parallèle du profilé d'application d'adhésif (7) dans le sens de déplacement de la vitre de fenêtre (4) lors du détachement.

16. Vitre de fenêtre selon l'une des revendications 1 à 12, caractérisée en ce qu'une barrette périphérique (21), orientée vers le collet de fixation (3), de la partie de bord (6') pénètre dans une gorge longitudinale (23) du profilé d'application d'adhésif (7').

17. Vitre de fenêtre selon la revendication 16, caractérisée en ce que la gorge longitudinale (23) et une partie de la barrette (21) engagée dans la gorge longitudinale (23) présentent des sections complémentaires.

18. Vitre de fenêtre selon la revendication 16 ou 17, caractérisée en ce que des parois latérales en vis-à-vis (22) de la gorge longitudinale (23) comportent chacune au moins une saillie qui est orientée dans la direction longitudinale de la gorge longitudinale (23) et qui s'engage derrière une saillie parallèle de la partie de bord (6') dans le sens de déplacement de la vitre de fenêtre (4') lors du détachement.

19. Véhicule automobile, caractérisé par au moins une vitre de fenêtre selon l'une des revendications 1 à 18.

20. Profilé d'application d'adhésif à monter entre un collet de fixation (3) d'une ouverture de fenêtre (2) d'un véhicule automobile et une partie de bord (6, 6') d'une vitre de fenêtre (4, 4') prévue pour être posée dans l'ouverture de fenêtre (2), comprenant une partie haute (17, 17'), laquelle comporte une surface d'application d'adhésif (20) sur son côté tourné vers le collet de fixation (3), et au moins une partie basse (13, 13'), laquelle peut être reliée de manière détachable à la partie de bord par un ancrage par complémentarité de formes.

21. Procédé de fabrication d'une vitre de fenêtre selon l'une des revendications 1 à 18, caractérisé en ce que la partie de bord (6, 6') est moulée sur le bord d'une vitre (5) par co-extrusion avec le profilé d'application d'adhésif (7, 7').

22. Procédé de fabrication d'une vitre de fenêtre selon l'une des revendications 1 à 18, caractérisé en ce que la partie de bord (6, 6') est d'abord moulée sur le bord d'une vitre (5), et le profilé d'application d'adhésif (7, 7') est ensuite mis en place.
